(19) Europäisches Patentamt / European Patent Office / Office européen des brevets

(11) **EP 1 715 456 B1**

(12) **FASCICULE DE BREVET EUROPEEN**

(45) Date de publication et mention
de la délivrance du brevet:
**27.08.2008  Bulletin 2008/35**

(51) Int Cl.:
***G06T 7/00*** *(2006.01)*

(21) Numéro de dépôt: **06290580.7**

(22) Date de dépôt: **07.04.2006**

(54) **Procédé de détection de brouillard nocturne et système de mise en oeuvre de ce procédé.**

Verfahren zur Erkennung von nächtlichem Nebel und System zur Umsetzung dieses Verfahrens

Method for detecting night fog and system implementing said method

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **19.04.2005  FR 0503906**

(43) Date de publication de la demande:
**25.10.2006  Bulletin 2006/43**

(73) Titulaire: **VALEO VISION
93012 Bobigny Cédex (FR)**

(72) Inventeurs:
• **LELEVE ,Joel
93800 Epinay sur Seine (FR)**
• **BENSRHAIR ,Abdelaziz
76131 Mont saint Aignan Cedex (FR)**
• **REBUT ,Jean
75010 Paris (FR)**

(56) Documents cités:
**EP-A- 0 687 594         EP-A- 1 498 721
FR-A- 2 847 367**

• **BUSCH C ET AL: "Wavelet transform for
analyzing fog visibility" IEEE INTELLIGENT
SYSTEMS, IEEE SERVICE CENTER, NEW YORK,
NY, US, vol. 13, no. 6, novembre 1998 (1998-11),
pages 66-71, XP002247567 ISSN: 1541-1672**
• **LELEVE J ET AL: "Fog lamp automation with
visibility sensor the next step of lighting
automation" VDI BER.; VDI BERICHTE 2005, no.
1907, 6 octobre 2005 (2005-10-06), pages 151-160,
XP008061020**

**Description**

*Domaine de l'invention*

L'invention concerne un procédé pour détecter, de nuit, la présence d'un élément tel que brouillard perturbant la visibilité d'un conducteur de véhicule routier et pour déterminer, lorsqu'un tel élément est détecté, la distance de visibilité du conducteur. L'invention concerne également un système pour mettre en oeuvre ce procédé. Elle concerne aussi un véhicule comportant un tel système.

L'invention trouve des applications dans le domaine de l'automobile et, en particulier, dans le domaine de l'éclairage et de la signalisation des véhicules routiers.

*Etat de la technique*

Un des problèmes rencontrés, dans le domaine de la signalisation et de l'éclairage d'une route par un véhicule, concerne la visibilité de la route par temps de brouillard. On sait, en effet, que par temps de brouillard la visibilité de la scène de route située à l'avant du véhicule est réduite, ce qui peut provoquer des accidents. Pour améliorer la visibilité de la scène de route, par temps brouillard, les véhicules actuels sont équipés de dispositifs d'éclairage antibrouillard, à l'avant du véhicule, et de feux de signalisation antibrouillard, à l'arrière du véhicule.

L'allumage et l'extinction des dispositifs d'éclairage et des feux antibrouillards sont généralement commandés manuellement par le conducteur à partir de commutateurs disposés sur le tableau de bord du véhicule. Or, il arrive que le conducteur oublie d'allumer ses feux et ses dispositifs d'éclairage antibrouillard. Le défaut d'allumage des feux antibrouillard peut s'avérer dangereux pour les véhicules situés derrière le véhicule considéré. Le défaut d'allumage des dispositifs d'éclairage antibrouillard entraîne une mauvaise visibilité de la scène de route située à l'avant du véhicule, avec tous les risques que cela entraîne.

A l'inverse, l'utilisation abusive des feux antibrouillard, par exemple par temps de pluie, peut provoquer une gêne du conducteur se trouvant derrière le véhicule considéré. De même, l'utilisation abusive des dispositifs d'éclairage antibrouillard à l'avant du véhicule peut être gênante pour les conducteurs venant en sens inverse en l'absence de brouillard. Au contraire, en cas de brouillard intense, il peut être intéressant pour le conducteur du véhicule de pouvoir disposer d'un éclairage suffisamment puissant pour permettre une visibilité correcte de la scène de route.

Il existe actuellement des dispositifs permettant de détecter la présence de brouillard pour commander automatiquement l'allumage des feux et des dispositifs d'éclairage et permettre au conducteur d'adapter la vitesse de son véhicule en fonction de la visibilité qu'il a de la scène de route située à l'avant du véhicule. Un de ces dispositifs de détection de la présence de brouillard utilise un système anticollision de type LIDAR (Light Detection and Ranging) qui permet d'évaluer la transmission de l'atmosphère pour en déduire la présence de brouillard. Or, les LIDARS sont des systèmes très coûteux ; leur installation est donc difficilement envisageable sur des véhicules classiques.

Il existe, par ailleurs, une méthode pour détecter la présence de brouillard et mesurer la distance de visibilité en condition diurne. Cette méthode est décrite dans l'article intitulé «driving assistance : Automatic fog detection and measure of the visibility distance », de N. Hautiere et D. Aubert. Elle repose sur la loi de Koschmieder qui fournit une expression simple de la luminance d'un objet observé à une distance d :

$$L = L_0 . exp(-k.d) + L_f . (1 - exp(-k.d))$$

où $L_0$ est la luminance intrinsèque de l'objet, k est le coefficient d'extinction du brouillard, $L_f$ est la luminance du brouillard ambiant causé par les multiples diffusions de la lumière dans l'atmosphère. Les paramètres du modèle de Koschmieder doivent être calculés sur des régions homogènes ciel / route. Cependant, cette méthode est difficilement utilisable pour la détection de brouillard nocturne, car les paramètres utilisés pour extraire les régions homogènes, de jour, sont beaucoup moins marqués de nuit. La localisation de ces régions est donc difficile. De plus, en condition nocturne, l'éclairage de la scène de route est réalisé par les projecteurs du véhicule et non par une lumière venant du ciel. Il apparaît alors un halo lumineux autour des projecteurs, ce qui rend difficile l'utilisation de la loi de Koschmieder.

Il existe par ailleurs une méthode et un système décrits dans la demande de brevet FR - A - 2 847 367. Cette méthode est basée sur la recherche d'une région homogène dans une image de la scène de route et sur la recherche d'un gradient vertical de lumière. Cette recherche permet d'établir une courbe au point d'inflexion de laquelle on obtient une relation entre la distance de visibilité et le point d'inflexion. Plus précisément, cette méthode comporte une étape de séparation de l'image en deux parties par une ligne verticale passant sensiblement par le milieu de l'image, une étape de détermination de la luminosité des pixels de ladite ligne verticale en fonction de la position des pixels sur ladite ligne verticale, une étape de calcul du point d'inflexion de la courbe représentant la luminosité des pixels en fonction de leur position et une étape de détermination de la distance de la visibilité du conducteur à partir de la position de ce point d'inflexion sur l'image.

Dans cette méthode, on considère que la lumière vient du ciel et que la zone sombre est située proche du sol. La séparation entre la zone sombre et la zone claire est alors réalisée par une ligne. Cette méthode est donc adaptée uniquement pour la détection de brouillard diurne et non pour la détection de brouillard nocturne. En effet, en condition nocturne, la lumière ne vient pas du ciel ; elle provient des projecteurs du véhicule. Or, la lumière émise par les projecteurs forme, en présence de brouillard, des halos lumineux de forme non plane. La lumière émise par les projecteurs d'un véhicule n'est donc pas séparable par une ligne droite horizontale.

En outre, de nuit, il est important de prendre en compte le fait que de plus en plus de dispositifs d'éclairage comportent un système DBL (Dynamic Bending Light) qui assure un pivotement du projecteur en fonction de la trajectoire de la route. Par exemple, avec un système DBL, les projecteurs pivotent vers la droite de l'axe du véhicule, en présence d'un virage à droite, et vers la gauche en présence d'un virage à gauche. La zone éclairée par les projecteurs du véhicule n'est donc pas constante, c'est-à-dire pas nécessairement dans l'axe du véhicule.

*Exposé de l'invention*

L'invention a justement pour but de remédier aux inconvénients des techniques décrites précédemment en proposant un procédé pour détecter la présence de brouillard nocturne. En condition nocturne, les caractéristiques de l'image de la scène de route, notamment le contraste, le détail des contours et le filtrage des hautes fréquences, sont moins importants qu'en condition diurne. Le traitement d'images pour une détection du brouillard nocturne ne peut donc être réalisé avec les techniques de traitement d'images connues pour la détection de brouillard diurne. Pour résoudre ce problème, l'invention propose de prendre en compte un effet majeur du brouillard nocturne, considéré comme gênant dans les techniques précédentes, à savoir l'effet de halo. En effet, par temps de brouillard, un halo de lumière apparaît autour des projecteurs du véhicule. Ce halo est dû à la diffusion de la lumière dans les particules d'eau formant le brouillard. Le procédé de l'invention propose justement de détecter ces halos lumineux sur des images de la scène de route puis de les traiter pour déterminer, à partir des paramètres de ces halos, la présence de brouillard. Lorsque du brouillard a été détecté, le procédé de l'invention propose de déterminer la distance de visibilité du véhicule.

De façon plus précise, l'invention concerne un procédé selon la revendication 1.

Le procédé de l'invention peut comporter une ou plusieurs des caractéristiques suivantes :

- lorsqu'un élément perturbant la visibilité est présent, il comporte, une opération de détermination de la distance de visibilité en fonction de paramètres de ladite courbe elliptique.
- l'opération d'extraction du halo lumineux comporte une binarisation de l'image et une extraction d'un contour du halo sur l'image binarisée.
- l'opération d'extraction du halo lumineux comporte une détection d'un seuil optimal de binarisation.
- l'opération d'approximation du halo lumineux comporte une détermination des paramètres de la courbe elliptique.
- la détermination des paramètres comporte une estimation d'un centre de gravité de la courbe elliptique.
- le centre de gravité de la courbe elliptique est déterminé par détection des points de la courbe elliptique ayant un même gradient.
- le centre de gravité de la courbe elliptique est déterminé par construction, à partir de tangentes à ladite courbe.
- la comparaison de la forme du halo lumineux avec la courbe elliptique comporte un calcul de l'erreur d'approximation entre la courbe elliptique et le contour du halo de l'image binarisée.
- la détermination de la distance de visibilité comporte une détermination d'un profil vertical passant par le centre de gravité de la courbe elliptique et d'un point d'inflexion de ladite courbe elliptique.
- la courbe elliptique est obtenue par combinaison de deux ellipses.

L'invention concerne également un système selon la revendication 12 permettant de mettre en oeuvre ce procédé.

Ce système comporte une ou plusieurs des caractéristiques suivantes :

- il comporte des moyens pour déterminer la distance de visibilité du véhicule, lorsqu'un élément perturbant la visibilité a été détecté.
- il comporte des moyens de détection d'une transition entre le jour et la nuit.
- il est connecté à un dispositif de commande d'une alarme destinée à indiquer une vitesse du véhicule inadaptée à la distance de visibilité.
- il est connecté à un dispositif de commande d'au moins une source lumineuse du véhicule pour adapter l'intensité lumineuse de ladite source lumineuse à la distance de visibilité.
- il est connecté à un dispositif de commande de la vitesse du véhicule pour modifier ladite vitesse en fonction de la distance de visibilité.

L'invention concerne également un véhicule routier comportant un système de détection de brouillard nocturne tel que défini précédemment.

*Brève description des figures*

La figure 1 représente schématiquement le diagramme fonctionnel du procédé de l'invention.

Les figures 2A et 2B représentent des exemples d'images de scènes de route nocturnes, respectivement, en présence et en l'absence de brouillard.

Les figures 3A et 3B représentent des histogrammes de niveaux de gris obtenus au cours du procédé de l'invention pour les images 2A et 2B.

Les figures 4A et 4B représentent des exemples d'images binarisées obtenues au cours du procédé de l'invention pour les images 2A et 2B.

Les figures 5A, 5B et 5C représentent différents exemples de halos lumineux approximés par des courbes elliptiques selon le procédé de l'invention.

La figure 6 représente un mode de détermination du centre d'une ellipse, selon le procédé de l'invention.

La figure 7A représente un autre exemple d'image d'une scène de route nocturne en présence de brouillard.

Les figures 7B et 7C représentent le profil vertical et le gradient obtenus avec le procédé de l'invention pour l'image de la figure 7A.

Les figures 8, 9, 10 et 11 représentent des exemples de courbes obtenues au cours du procédé de l'invention et montrant une évolution de visibilité dans le cas d'une dissipation de brouillard.

*Description détaillée de modes de réalisation de l'invention*

L'invention concerne un procédé pour détecter la présence d'un élément tel que brouillard perturbant la visibilité du conducteur du véhicule. Par la suite, l'invention sera décrite en considérant que l'élément perturbant est effectivement le brouillard, ce dernier étant l'élément le plus fréquent et le plus perturbant du point de vue de la visibilité des conducteurs de véhicules.

On notera cependant que le procédé selon l'invention est apte à détecter d'autres éléments perturbants tels que la fumée, la pluie ou la neige, moyennant certaines adaptations apportées aux modes de réalisation décrits ci-dessous. Ces adaptations sont à la portée de l'homme du métier instruit par la présente divulgation et devront être considérées comme incluses dans la présente invention.

Lorsque du brouillard a été détecté, le procédé de l'invention permet de déterminer la distance de visibilité du véhicule, c'est-à-dire la distance jusqu'à laquelle le conducteur du véhicule peut apercevoir d'éventuels obstacles dans la scène de route.

Pour détecter la présence de brouillard, le procédé de l'invention prend en compte l'effet de halo lumineux produit par le dispositif d'éclairage du véhicule, en cas de brouillard nocturne. Pour cela, le procédé de l'invention propose de réaliser des images de la scène de route située à l'avant du véhicule et de détecter, sur ces images, le ou les halos lumineux. Comme expliqué plus en détail par la suite, les projecteurs du véhicule peuvent produire un seul halo lumineux. Selon le type de projecteurs, ils peuvent aussi produire deux halos lumineux qui s'entrecroisent formant une seule zone lumineuse dont le contour diffère sensiblement de celui d'un seul halo. La majeure partie de la description va être établie dans le cas où les projecteurs produisent un seul halo lumineux, étant entendu que le cas des deux halos sera décrit en détail lorsque le procédé de l'invention diverge pour un ou pour deux halos.

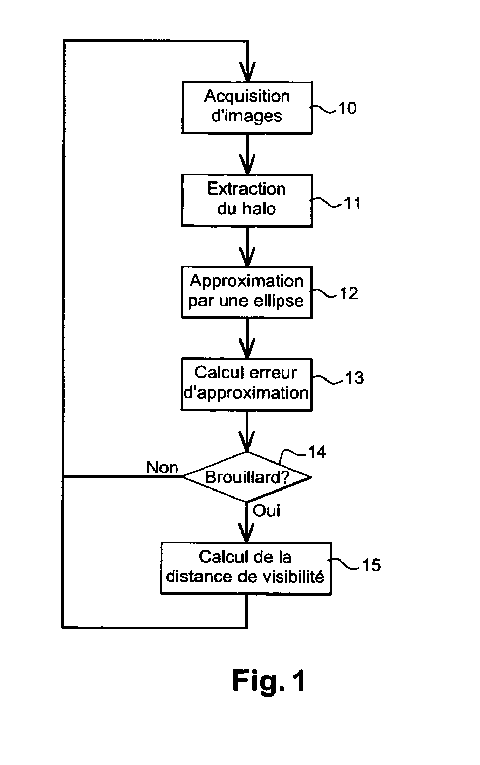

Les différentes étapes du procédé de l'invention sont représentées par un diagramme fonctionnel sur la figure 1 : Ce procédé consiste tout d'abord à acquérir successivement plusieurs images de la scène de route (étape 10). Ces images sont traitées successivement selon le même procédé. Le traitement successif de plusieurs images permet de détecter l'apparition ou la disparition du brouillard. Chaque image est traitée de la façon qui va maintenant être décrite.

On extrait, dans l'image, le halo lumineux provenant des projecteurs (étape 11). L'image de la scène de route, de nuit, est très pauvre en informations. Aussi, pour détecter le halo dans l'image, c'est-à-dire la zone la plus claire de l'image, on réalise une binarisation de cette image. Cette binarisation consiste à séparer, selon un seuil binaire, les pixels sombres et les pixels clairs de l'image. Cette binarisation peut être réalisée en utilisant la méthode décrite par N. Otsu dans l'article « A Threshold Selection Method from Gray-Level Histograms », IEEE Transactions on Systems, Man and Cybernetics, Vol.9, No.1, pp.62-66, 1979.

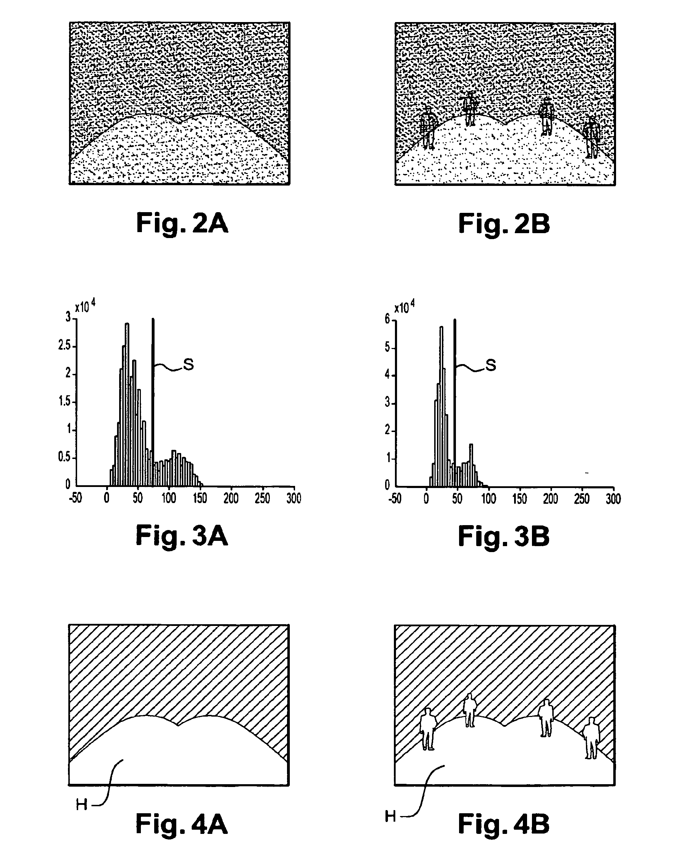

La méthode d'Otsu propose de trouver un seuil de binarisation optimal, défini comme étant celui pour lequel la variance intra-classe est minimale. Deux exemples d'extraction de halos lumineux sont montrés, respectivement, sur les figures 2A, 3A, 4A et 2B, 3B, 4B.

Plus précisément, les images des figures 2A et 2B montrent deux exemples d'images d'une même scène de route réalisées de nuit, respectivement, en présence de brouillard et en l'absence de brouillard. En présence de brouillard (figure 2A), on ne distingue, sur l'image, qu'une zone sombre dans la partie supérieure de l'image et une zone claire dans la partie inférieure de l'image. Cette zone claire correspond au halo lumineux produit par les projecteurs du véhicule. En l'absence de brouillard (figure 2B), on distingue, sur l'image, une zone sombre dans la partie supérieure de l'image, une zone plus claire dans la partie inférieure de l'image et des obstacles, par exemple des personnages, dans la zone intermédiaire de l'image.

Les figures 3A et 3B représentent les histogrammes des niveaux de gris des pixels des images respectives 2A et 2B avec, en trait épais, le seuil optimal S de binarisation déterminé pour chaque image, par la méthode d'Otsu. Ce seuil optimal S est choisi comme étant la limite entre des niveaux de gris élevés et des niveaux de gris faibles. Chaque image est ensuite seuillée par rapport à ce seuil optimal S. Le procédé permet alors d'obtenir des images binarisées comme montré sur les figures 4A et 4B. Les images obtenues sont des images numériques à deux niveaux de pixels : niveau 1 pour les pixels correspondants à la zone sombre de l'image initiale et niveau 0 pour les pixels correspondants à la zone claire de l'image initiale. Comme on le voit sur la figure 4A, en présence de brouillard, l'image binarisée comporte une limite entre la zone blanche (pixels à niveau 0) et la zone noire (pixels à niveau 1) relativement franche avec une forme elliptique. Au contraire, en l'absence de brouillard, l'image binarisée 4B comporte une limite entre la zone blanche (pixels à niveau 0) et la zone noire (pixels à niveau 1) relativement floue avec des parties blanches insérées dans la zone noire et correspondant à des obstacles visibles dans la scène de route.

Autrement dit, les images 4A et 4B binarisées, ou seuillée, montrent le halo lumineux H extrait des images initiales, respectivement 2A et 2B. Lorsque ce halo H a été extrait, le procédé de l'invention consiste à effectuer une approximation de la forme de ce halo. Plus précisément, la forme de ce halo H est approximée par une courbe elliptique. On entend, par courbe elliptique, la courbe correspondant à la forme d'une ellipse ou la courbe obtenue par combinaison de deux ellipses. En effet, certains types de projecteurs, par exemple des projecteurs DBL, produisent un halo lumineux dont le contour a la forme de deux ellipses se chevauchant. En particulier, lorsque les projecteurs sont dirigés droit devant le véhicule, le contour du halo lumineux a la forme d'une ellipse. Lorsque les projecteurs éclairent latéralement vers la droite ou vers la gauche du véhicule, avec la fonction DBL, le contour du halo lumineux a la forme de deux ellipses entrecroisées. Dans le cas ci-dessus, le procédé de l'invention approxime donc le halo lumineux par deux ellipses entrecroisées.

Selon le procédé de l'invention, l'approximation du halo lumineux (étape 12 de la figure 1) est réalisée en déterminant la meilleure courbe elliptique, au sens de la théorie des moindres carrés. Pour cela, le contour du halo lumineux est approximé par la formule mathématique :

$$\left[\frac{((x - xc).\cos(\Phi) - (y - yc)\sin(\Phi))}{a}\right]^2 + \left[\frac{((x - xc).\sin(\Phi) - (y - yc).\cos(\Phi))}{b}\right]^2 = 1$$

où xc est la position du centre de gravité de l'ellipse en abscisse, yc est la position du centre de gravité de l'ellipse en ordonnée, a est le grand axe de l'ellipse, b le petit axe de l'ellipse et $\Phi$ est l'angle de rotation de l'ellipse.

Cette équation générale d'une ellipse comporte cinq paramètres. Une estimation de ces cinq paramètres permet d'approximer la forme du contour du halo lumineux. Comme on le comprend aisément, l'estimation de ces paramètres nécessite un certain temps de calcul. Aussi, pour améliorer ce temps de calcul, le procédé de l'invention propose de ne pas calculer ces cinq paramètres simultanément. Pour cela, le procédé de l'invention propose de décomposer l'estimation de ces paramètres en deux parties, à savoir une estimation du centre de l'ellipse (position en abscisse et position en ordonnée) puis une estimation des autres paramètres, tels que le grand axe, le petit axe et l'angle de l'ellipse.

L'estimation du centre de l'ellipse peut être réalisée en utilisant les propriétés de symétrie de l'ellipse, qui sont que chaque point d'une ellipse a un point opposé qui doit avoir le même gradient de contour, c'est-à-dire la même fonction dérivée en ce point. On cherche alors tous les couples de points ayant un gradient identique et on calcule le point milieu de ces couples. Un histogramme en deux dimensions est construit, qui comporte ces points milieux ainsi que les maxima sélectionnés comme candidats pour le centre de gravité de l'ellipse.

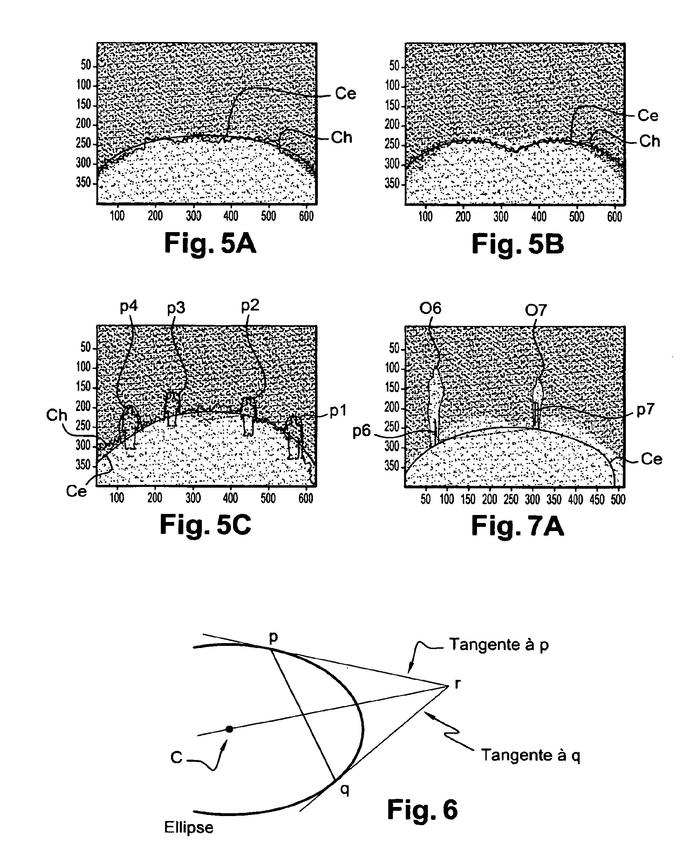

Une autre méthode d'estimation du centre de gravité de l'ellipse peut être utilisée, notamment lorsqu'une part de l'ellipse est cachée dans l'image. Cette autre méthode consiste à construire le centre de l'ellipse à partir des tangentes en différents points de ladite ellipse. Un exemple de construction selon cette méthode est représenté sur la figure 6. Cette méthode consiste à choisir plusieurs points de l'ellipse, par exemple les points p et q, puis à construire la tangente en chacun de ces points. Ces tangentes se rejoignent en un point r. Le centre de l'ellipse se situe sur la droite cr, passant par le centre du segment pq et l'intersection des tangentes en p et en q. En réalisant plusieurs fois cette opération, c'est-à-dire pour différents couples de points p et q de l'ellipse, les droites cr obtenues se coupent au centre c de l'ellipse. L'extraction des coordonnées du centre c peut alors être effectuée par différents moyens comme, par exemple, par une méthode d'accumulateurs dont on retient le maximum pour désigner le centre.

Lorsque la position du centre c de l'ellipse est connue, on place l'ellipse dans un repère lié à ce centre. Dans ce repère, l'équation de l'ellipse s'écrit $ax^2+2bxy+cy^2=1$ et peut être résolue par la méthode des moindres carrés. Le système peut alors s'exprimer sous la forme matricielle

$$\begin{bmatrix} x_1^2 & 2x_1y_1 & y_1^2 \\ x_2^2 & 2x_2y_2 & y_2^2 \\ x_n^2 & 2x_ny_n & y_n^2 \end{bmatrix} \begin{bmatrix} a \\ b \\ c \end{bmatrix} = \begin{bmatrix} 1 \\ 1 \\ 1 \end{bmatrix}$$

où les paramètres a, b et c peuvent être obtenus par inversion du système.

On connaît alors tous les paramètres de la courbe elliptique approximant le halo lumineux. Sur les figures 5A, 5B et 5C, on a représenté trois exemples d'images de scènes de route montrant chacune le contour du halo Ch et la courbe elliptique Ce approximant ce contour. En particulier, la figure 5A montre la courbe elliptique Ce et le contour du halo Ch en présence de brouillard dans le cas de projecteurs classiques produisant un halo ayant la forme d'une seule ellipse. La figure 5B montre la courbe elliptique Ce et le contour du halo Ch en présence de brouillard dans le cas de projecteurs DBL produisant un halo ayant la forme d'une double ellipse. Dans ces deux cas, on voit que la courbe elliptique est relativement proche du contour du halo, ce qui signifie que le halo est bien approximé par la courbe elliptique. On en déduit qu'il y a une présence de brouillard. Au contraire, sur la figure 5C, la courbe elliptique Ce est relativement décalée du contour du halo Ch, notamment au niveau des pics du halo P1 à P4. On en déduit qu'il n'y a pas de brouillard perturbant la visibilité.

En effet, plus le brouillard est dense et plus la lumière est vite réfléchie, ce qui signifie que le contour du halo se rapproche d'une ellipse. Au contraire, lorsque la visibilité est bonne, le halo lumineux a une forme plus diffuse, donc plus éloignée d'une ellipse. En conséquence, en fonction de la forme de la courbe elliptique obtenue, c'est-à-dire en fonction des paramètres calculés de l'ellipse, on peut déduire la présence ou l'absence de brouillard.

La déduction de présence ou absence de brouillard peut donc résulter de la comparaison de la courbe elliptique avec le contour du halo obtenu par la binarisation de l'image. Cette comparaison peut être obtenue, comme schématisé sur la figure 1, par calcul d'une erreur d'approximation (étape 13). Cette erreur d'approximation correspond à l'erreur quadratique calculée selon une méthode connue, entre le contour du halo et la courbe elliptique. Tant que cette erreur est relativement faible, on considère qu'il y a présence de brouillard. Lorsque l'erreur est élevée, on considère que la visibilité est bonne.

Comme montré sur la figure 1, lorsque l'erreur d'approximation a été déterminée, on déduit, en fonction de la valeur de cette erreur, la présence ou non de brouillard (étape 14). L'information de présence ou absence de brouillard peut alors être donnée au conducteur du véhicule.

Dans un mode de réalisation de l'invention, le procédé peut se poursuivre par la détermination de la distance de visibilité du conducteur du véhicule. Plus précisément, en l'absence de brouillard, le procédé schématisé sur la figure 1 se poursuit par l'acquisition d'une nouvelle image traitée de la façon expliquée précédemment. En présence de brouillard, le procédé se poursuit par la détermination de la distance de visibilité (étape 15). En effet, il existe une relation entre les paramètres de la courbe elliptique et la distance de visibilité. On peut donc déterminer, à partir des paramètres de la courbe elliptique déterminés comme expliqué précédemment, la distance de visibilité. Cette détermination de la distance de visibilité est réalisée en extrayant un profil vertical passant par le centre de gravité de la courbe elliptique. Le profil vertical est une coupe de l'image verticale passant par le centre de gravité de la courbe elliptique. Chaque point du profil vertical est caractérisé par une ligne de balayage et une luminosité correspondant à un certain niveau de gris, avec 256 niveaux de gris possibles.

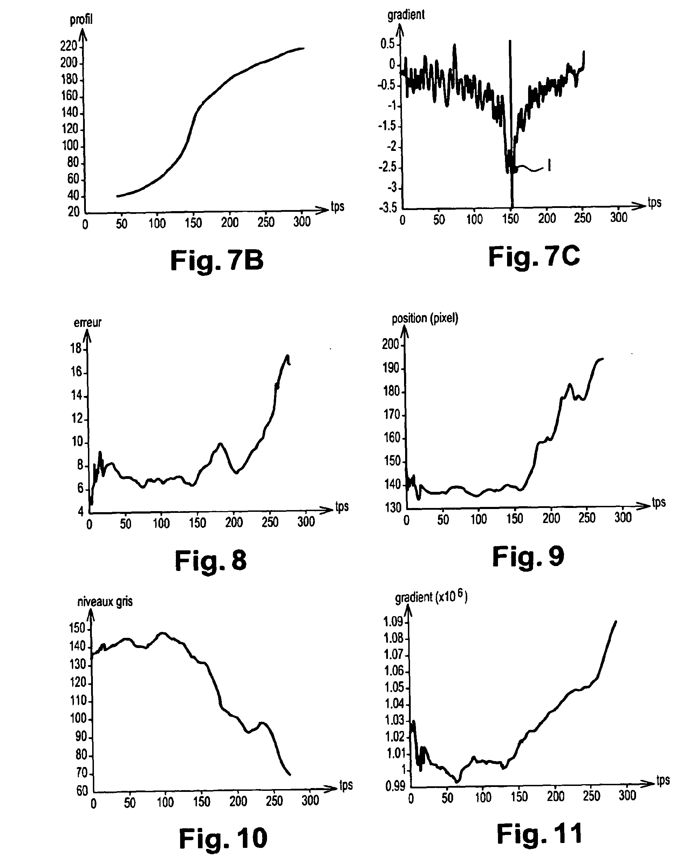

Un exemple de profil vertical est montré sur la figure 7B. Ce profil vertical a été réalisé à partir de l'image d'une scène de route de la figure 7A. Cette image de la figure 7A montre une scène de route avec des obstacles O6 et O7. La courbe elliptique Ce approximant le contour du halo lumineux de cette image 7A comporte des pics lumineux P6 et P7 correspondant aux obstacles O6 et O7. Le profil de cette image est représenté sur la figure 7B, en fonction du temps. Lorsque le profil vertical est lissé, cela signifie que la luminosité est diffuse et, par conséquent, qu'il y a présence de brouillard.

Une dérivée de ce profil vertical peut ensuite être tracée, comme montré sur la figure 7C. Cette dérivée correspond au gradient de la courbe elliptique. Un point d'inflexion I peut être lu sur ce gradient. La position de ce point d'inflexion dans l'image fournit la distance de visibilité du véhicule. Plus le point d'inflexion est bas dans l'image et plus la distance de visibilité est faible, et inversement.

Comme on le comprend à la lecture de ce qui précède, plusieurs critères peuvent être pris en compte, selon le procédé de l'invention, pour détecter la présence ou non de brouillard et déterminer la distance de visibilité. Ce procédé permet donc de détecter l'apparition de brouillard nocturne ou, au contraire, la disparition de brouillard nocturne. Un exemple d'évolution de ces différents critères, dans le temps, est représenté sur les figures 8, 9, 10 et 11. Plus précisément, la figure 8 montre l'évolution de l'erreur d'approximation dans ce cas de dissipation de brouillard. La figure 9 montre l'évolution de la distance de visibilité dans le cas d'une dissipation de brouillard. La figure 10 montre l'évolution des niveaux de gris et la figure 11 montre l'évolution du gradient dans ce cas de dissipation de brouillard.

Le procédé selon l'invention peut être mis en oeuvre par un système de détection nocturne de la présence de brouillard. Ce système comporte une caméra assurant la prise d'images de la scène de route. Cette caméra peut être une caméra déjà en place dans le véhicule et utilisée pour d'autres fonctions que la détection de brouillard, par exemple pour la fonction DBL des projecteurs.

Ce système comporte également des moyens de traitement d'images pour traiter les images de la façon décrite précédemment. Ces moyens de traitement d'images peuvent être une unité de traitement de signaux associée généralement à la caméra. Ces moyens de traitement peuvent être aussi incorporés dans un calculateur du véhicule, par exemple un calculateur de navigation.

Ce système permet, par la détermination des profils verticaux, de déterminer si la lumière vient du ciel ou du véhicule. De ce fait, il est possible d'en déduire la condition de luminosité extérieure, c'est-à-dire si c'est le jour ou la nuit. Ce système peut donc être associé avec un système de détection du brouillard diurne et détecter, automatiquement, à tout instant de la journée, quel système doit être en fonctionnement (système de détection nocturne ou système de détection diurne).

Avantageusement, le système de l'invention peut être connecté à un dispositif d'alarme pour informer le conducteur que la vitesse du véhicule est inadaptée à la distance de visibilité. Ce système peut aussi être connecté directement à un dispositif de régulation automatique de la vitesse.

Ce système peut aussi être connecté à un dispositif de commande des sources lumineuses du véhicule de façon à adapter la puissance d'éclairage du véhicule à la distance de visibilité. Ce dispositif de commande peut aussi commander la mise en fonctionnement ou la mise à l'arrêt de dispositifs d'éclairage ou de signalisation spécifiques au brouillard, comme les feux antibrouillard.

Le système de l'invention peut également être connecté à un dispositif de mesure de l'assiette du véhicule ou à tout autre système de navigation, comme le GPS (Global Positioning System) pour prendre en compte ces informations avant de transmettre des données au conducteur ou aux différents dispositifs de commande indiqués précédemment.

### Revendications

1. Procédé pour détecter, de nuit, la présence d'un élément perturbant la visibilité d'une scène de route située à l'avant d'un véhicule, appartenant au groupe comprenant le brouillard, la fumée, la pluie ou la neige, **caractérisé en ce qu'**il comporte les opérations suivantes :

   - acquisition d'une image de la scène de route (10),
   - extraction, sur l'image de la scène de route, d'au moins un halo lumineux (11) produit par un dispositif d'éclairage du véhicule,
   - approximation (12) d'une forme de ce halo lumineux par une courbe elliptique (Ce),
   - calcul d'une erreur d'approximation entre la forme de ce halo lumineux (Ch) et la courbe elliptique (Ce) pour en déduire la présence ou l'absence d'un élément perturbant la visibilité.

2. Procédé selon la revendication 1, **caractérisé en ce qu'**il comporte, lorsqu'un élément perturbant la visibilité est présent (14), une opération de détermination de la distance de visibilité (15) en fonction de paramètres de ladite courbe elliptique.

3. Procédé selon la revendication 1 ou 2, **caractérisé en ce que** l'opération d'extraction du halo lumineux comporte une binarisation de l'image et une extraction d'un contour du halo (Ch) sur l'image binarisée.

4. Procédé selon la revendication 3, **caractérisé en ce que** l'opération d'extraction du halo lumineux comporte une détection d'un seuil optimal de binarisation (S).

5. Procédé selon l'une quelconque des revendications 1 à 4, **caractérisé en ce que** l'opération d'approximation du halo lumineux comporte une détermination des paramètres de la courbe elliptique.

**6.** Procédé selon la revendication 5, **caractérisé en ce que** la détermination des paramètres comporte une estimation d'un centre de gravité (c) de la courbe elliptique (Ce).

**7.** Procédé selon la revendication 6, **caractérisé en ce que** le centre de gravité de la courbe elliptique est déterminé par détection des points de la courbe elliptique ayant un même gradient.

**8.** Procédé selon la revendication 6, **caractérisé en ce que** le centre de gravité de la courbe elliptique est déterminé par construction, à partir de tangentes à ladite courbe.

**9.** Procédé selon l'une quelconque des revendications 3 à 8, **caractérisé en ce que** la comparaison de la forme du halo lumineux avec la courbe elliptique comporte un calcul de l'erreur d'approximation (13) entre la courbe elliptique et le contour du halo de l'image binarisée.

**10.** Procédé selon l'une quelconque des revendications 2 à 9, **caractérisé en ce que** la détermination de la distance de visibilité comporte une détermination d'un profil vertical passant par le centre de gravité (c) de la courbe elliptique et d'un point d'inflexion (I) de ladite courbe elliptique.

**11.** Procédé selon l'une quelconque des revendications 1 à 10, **caractérisé en ce que** la courbe elliptique est obtenue par combinaison de deux ellipses.

**12.** Système pour détecter, de nuit, la présence d'un élément perturbant la visibilité d'une scène de route située à l'avant d'un véhicule, appartenant au groupe comprenant le brouillard, la fumée, la pluie ou la neige, **caractérisé en ce qu'**il comporte une caméra pour l'acquisition d'images de la scène de route et des moyens de traitement d'images pour extraire au moins un halo lumineux de l'image de la scène de route, réaliser une approximation de la forme de ce halo lumineux par une courbe elliptique et calculer une erreur d'approximation entre la forme de ce halo lumineux (Ch) et la courbe elliptique (Ce) pour en déduire la présence ou l'absence d'un élément perturbant la visibilité.

**13.** Système selon la revendication 12, **caractérisé en ce qu'**il comporte des moyens pour déterminer la distance de visibilité du véhicule, lorsqu'un élément perturbant la visibilité a été détecté.

**14.** Système selon la revendication 13, **caractérisé en ce qu'**il est connecté à un dispositif de commande d'une alarme destinée à indiquer une vitesse du véhicule inadaptée à la distance de visibilité.

**15.** Système selon la revendication 13 ou 14, **caractérisé en ce qu'**il est connecté à un dispositif de commande d'au moins une source lumineuse du véhicule pour adapter l'intensité lumineuse de ladite source lumineuse à la distance de visibilité.

**16.** Système selon l'une quelconque des revendications 13 à 15, **caractérisé en ce qu'**il est connecté à un dispositif de commande de la vitesse du véhicule pour modifier ladite vitesse en fonction de la distance de visibilité.

**17.** Système selon l'une quelconque des revendications 12 à 16, **caractérisé en ce qu'**il comporte des moyens de détection d'une transition entre le jour et la nuit.

**18.** Véhicule routier **caractérisé en ce qu'**il comporte un système de détection, de nuit, de la présence d'un élément perturbant la visibilité d'une scène de route située à l'avant du véhicule, appartenant au groupe comprenant le brouillard, la fumée, la pluie ou la neige selon l'une quelconque des revendications 12 à 17.

**Claims**

**1.** Method to detect, at night, the presence of an element such as fog, smoke, rain or snow, disturbing the visibility of a road scene located in front of a vehicle, **characterized in that** it involves the following operations:

- acquiring an image of the road scene (10),
- extracting, on the scene image, at least one light halo (11) produced by a headlight of the vehicle,
- approximating (12) the shape of this light halo by an elliptic curve (Ce),
- comparing the shape of this light halo (Ch) with the obtained elliptic curve (Ce) to deduce the presence or the

8

absence of an element disturbing the visibility.

2. Method according to claim 1, **characterized in that** when an element disturbing the visibility is present (14), it involves an operation of determing the distance of visibility (15) according to parameters of said elliptic curve.

3. Method according to the claim 1 or 2, **characterized in that** the operation of extracting the light halo invoves binarisation of the image and extraction of a contour of the halo (Ch) on the binarised image.

4. Method according to claim 3, **characterized in that** the operation of extracting the light halo involves detection of an optimum binarisation threshold (S).

5. Method according to anyone of claims 1 to 4, **characterized in that** the operation of approximating the light halo involves determination of the parameters of the elliptic curve.

6. Method according to claim 5, **characterized in that** determination of the parameters comprises estimating a centre of gravity (c) of the elliptic curve (Ce).

7. Method according to claim 6, **characterized in that** the centre of gravity of the elliptic curve is determined by detecting the points of the elliptic curve having the same gradient.

8. Method according to claim 6, **characterized in that** the centre of gravity of the elliptic curve is determined by construction, starting from tangents to said curve.

9. Method according to anyone of claims 3 to 8, **characterized in that** comparison of the shape of the light halo with the elliptic curve comprises approximation error calculation (13) between the elliptic curve and the contour of the halo of the binarised image.

10. Method according to anyone of claims 2 to 9, **characterized in that** determination of the visiblity distance comprises determing a vertical profile passing through the centre of gravity (c) of the elliptic curve and a point of inflection (1) of said elliptic curve.

11. Method according to anyone of claims 1 to 10, **characterized in that** the elliptic curve is obtained by the combination of two ellipses.

12. System to detect, at night, the presence of an element such as fog, smoke, rain or snow, disturbing the visibility of a road scene located in front of a vehicle, **characterized in that** it comprises a camera for acquiring images of the road scene and image processing means to extract at least one light halo from the scene image, to carry out an approximation of the shape of this light halo through an elliptic curve and to calculate an approximation error between the shape of this light halo (Ch) and the elliptic curve (Ce) in order to deduce the presence or the absence of an element disturbing the visibility.

13. System according to claim 12, **characterized in that** it comprises means to determine the visibility distance of the vehicle, when an element disturbing visibility has been detected.

14. System according to claim 13, **characterized in that** it is connected to a control device of an alarm intended to indicate a speed of the vehicle, which is not commensurate with the visibility distance.

15. System according to the claim 13 or 14, **characterized in that** it is connected to a control device of at least one light source of the vehicle to adapt the light intensity of said light source to the visibility distance.

16. System according to anyone of claims 13 to 15, **characterized in that** it is connected to a speed control device of the vehicle to modify said speed according to the visibility distance.

17. System according to anyone of claims 12 to 16, **characterized in that** it comprises means to detect the transition between day and night.

18. Road vehicle **characterized in that** it comprises a system for detecting, at night, the presence of an element such as fog, smoke, rain or snow, disturbing the visibility of a road scene located in front of the vehicle according to anyone of claims 12 to 17.

**Patentansprüche**

1. Verfahren zur nächtlichen Erkennung eines die Sicht auf eine vor dem Fahrzeug liegende Straßenszene beeinträchtigenden Elements aus der Gruppe umfassend Nebel, Rauch, Regen oder Schnee,
**dadurch gekennzeichnet, dass** es die folgenden Schritte umfasst:

   - Erzielen (10) einer Abbildung der Straßenszene,
   - Extraktion (11) wenigstens eines durch eine Beleuchtungsvorrichtung des Fahrzeugs erzeugten Lichthofs aus der Abbildung der Straßenszene,
   - Approximation (12) einer Form dieses Lichthofs durch eine elliptische Kurve (Ce),
   - Berechnung eines Approximationsfehlers zwischen der Form dieses Lichthofs (Ch) und der elliptischen Kurve (Ce), um daraus abzuleiten, ob ein die Sicht beeinträchtigendes Element vorhanden ist oder nicht.

2. Verfahren nach Anspruch 1,
**dadurch gekennzeichnet, dass** es beim Auftreten eines die Sicht beeinträchtigenden Elements (14) einen Schritt zur Bestimmung (15) der Sichtweite in Abhängigkeit von Parametern der elliptischen Kurve umfasst.

3. Verfahren nach Anspruch 1 oder 2,
**dadurch gekennzeichnet, dass** der Schritt zur Extraktion des Lichthofs eine Binarisierung des Bildes und eine Extraktion eines Umrisses des Lichthofs (Ch) aus dem binarisierten Bild umfasst.

4. Verfahren nach Anspruch 3,
**dadurch gekennzeichnet, dass** der Schritt zur Extraktion des Lichthofs eine Erkennung eines optimalen Binarisierungsschwellenwerts (S) umfasst.

5. Verfahren nach einem der Ansprüche 1 bis 4,
**dadurch gekennzeichnet, dass** der Schritt zur Approximation des Lichthofs eine Bestimmung der Parameter der elliptischen Kurve umfasst.

6. Verfahren nach Anspruch 5,
**dadurch gekennzeichnet, dass** die Bestimmung der Parameter eine Schätzung eines Schwerpunkts (c) der elliptischen Kurve (Ce) umfasst.

7. Verfahren nach Anspruch 6,
**dadurch gekennzeichnet, dass** der Schwerpunkt der elliptischen Kurve durch Erkennung von Punkten der elliptischen Kurve mit gleichem Gradienten bestimmt wird.

8. Verfahren nach Anspruch 6,
**dadurch gekennzeichnet, dass** der Schwerpunkt der elliptischen Kurve durch Konstruktion anhand von Kurventangenten bestimmt wird.

9. Verfahren nach einem der Ansprüche 3 bis 8,
**dadurch gekennzeichnet, dass** der Vergleich der Lichthofform mit der elliptischen Kurve eine Berechnung (13) des Approximationsfehlers zwischen der elliptischen Kurve und dem Umriss des Lichthofs des binarisierten Bildes umfasst.

10. Verfahren nach einem der Ansprüche 2 bis 9,
**dadurch gekennzeichnet, dass** die Bestimmung der Sichtweite eine Bestimmung eines durch den Schwerpunkt (c) der elliptischen Kurve verlaufenden vertikalen Profils und eines Wendepunktes (I) der elliptischen Kurve umfasst.

11. Verfahren nach einem der Ansprüche 1 bis 10,
**dadurch gekennzeichnet, dass** die elliptische Kurve durch Kombination zweier Ellipsen erzielt wird.

12. System zur nächtlichen Erkennung eines die Sicht auf eine vor einem Fahrzeug liegende Straßenszene beeinträchtigenden Elements aus der Gruppe umfassend Nebel, Rauch, Regel oder Schnee,

**dadurch gekennzeichnet, dass** es eine Kamera zum Erzielen von Abbildungen der Straßenszene und Mittel zur Bildbearbeitung umfasst, um aus der Abbildung der Straßenszene wenigstens einen Lichthof zu extrahieren, eine Approximation der Lichthofform durch eine elliptische Kurve vorzunehmen und einen Approximationsfehler zwischen der Form des Lichthofs (Ch) und der elliptischen Kurve (Ce) zu berechnen, um daraus abzuleiten, ob ein die Sicht beeinträchtigendes Element vorhanden ist oder nicht.

13. System nach Anspruch 12,
**dadurch gekennzeichnet, dass** es Mittel zum Bestimmen der Sichtweite des Fahrzeugs umfasst, wenn ein die Sicht beeinträchtigendes Element erkannt worden ist.

14. System nach Anspruch 13,
**dadurch gekennzeichnet, dass** es mit einer Vorrichtung zum Auslösen eines Alarms verbunden ist, der dazu bestimmt ist, eine an die Sichtweite nicht angepasste Fahrzeuggeschwindigkeit anzuzeigen.

15. System nach Anspruch 13 oder 14,
**dadurch gekennzeichnet, dass** es mit einer Vorrichtung zur Betätigung wenigstens einer Lichtquelle des Fahrzeugs verbunden ist, um die Lichtstärke der Lichtquelle an die Sichtweite anzupassen.

16. System nach einem der Ansprüche 13 bis 15,
**dadurch gekennzeichnet, dass** es mit einer Vorrichtung zur Steuerung der Fahrzeuggeschwindigkeit verbunden ist, um die Geschwindigkeit in Abhängigkeit der Sichtweite zu ändern.

17. System nach einem der Ansprüche 12 bis 16,
**dadurch gekennzeichnet, dass** es Mittel zur Erkennung eines Übergangs vom Tag zur Nacht umfasst.

18. Kraftfahrzeug,
**dadurch gekennzeichnet, dass** es ein System zur nächtlichen Erkennung eines die Sicht auf eine vor dem Fahrzeug liegende Straßenszene beeinträchtigenden Elements aus der Gruppe umfassend Nebel, Rauch, Regen oder Schnee nach einem der Ansprüche 12 bis 17 umfasst.

```
        ┌──────────────────┐
        │   Acquisition    │╮
        │    d'images      │├─10
        └──────────────────┘╯
                 │
                 ▼
        ┌──────────────────┐
        │    Extraction    │╮
        │     du halo      │├─11
        └──────────────────┘╯
                 │
                 ▼
        ┌──────────────────┐
        │   Approximation  │╮
        │  par une ellipse │├─12
        └──────────────────┘╯
                 │
                 ▼
        ┌──────────────────┐
        │  Calcul erreur   │╮
        │  d'approximation │├─13
        └──────────────────┘╯
                 │
                 ▼
                       ╱╲  ──14
          Non        ╱    ╲
        ◄───────────┤ Brouillard? ├
                     ╲    ╱
                       ╲╱
                        │ Oui
                        ▼
        ┌──────────────────┐
        │   Calcul de la   │╮
        │distance de visibilité│├─15
        └──────────────────┘╯
```

# Fig. 1

**Fig. 2A**

**Fig. 2B**

**Fig. 3A**

**Fig. 3B**

**Fig. 4A**

**Fig. 4B**

**Fig. 5A**

**Fig. 5B**

**Fig. 5C**

**Fig. 7A**

**Fig. 6**

**Fig. 7B**

**Fig. 7C**

**Fig. 8**

**Fig. 9**

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2847367 A

**Littérature non-brevet citée dans la description**

• **N. OTSU.** A Threshold Selection Method from Gray-Level Histograms. *IEEE Transactions on Systems, Man and Cybernetics,* 1979, vol. 9 (1), 62-66